# EUROPÄISCHE PATENTSCHRIFT

(11) **EP 2 325 937 B1**
(45) Veröffentlichungstag und Bekanntmachung des Hinweises auf die Patenterteilung: **15.01.2014**
(21) Anmeldenummer: 09014397.5
(22) Anmeldetag: 18.11.2009
(51) Int. Cl.: H01M 10/50, F16L 21/02

(54) **Steckstück**
Plug-in piece
Pièce enfichable

(43) Veröffentlichungstag der Anmeldung: 25.05.2011
(73) Patentinhaber: Carl Freudenberg KG, 69469 Weinheim (DE)
(72) Erfinder: Heldmann, Ralf, 69483 Wald-Michelbach (DE); Kritzer, Peter, 67147 Forst (DE); Arnold, Hans-Peter, 69517 Gorxheimertal (DE); Heinemann, Joachim, 69517 Gorxheimertal (DE); Weigand, Peter, 64720 Michelstadt (DE)

(56) Entgegenhaltungen:
- EP-A1- 1 653 537
- EP-A2- 1 024 322
- WO-A1-2008/081298
- WO-A1-2008/153602
- WO-A2-03/103083
- DE-A1-102006 010 063
- US-A1- 2006 169 507

## Beschreibung

### Technisches Gebiet

Die Erfindung betrifft ein Steckstück zum Verbinden von Durchführungsöffnungen eines Kühlkreislaufes eines Energiespeichers, umfassend ein Tragrohr, welches mit Dichtbereichen aus elastomerem Material versehen ist.

### Stand der Technik

Energiespeicher, insbesondere Batterien mit größerer Speicherkapazität beispielsweise für elektrisch oder teilweise elektrische angetriebene Kraftfahrzeuge und für industrielle Anwendungen bestehen meist aus mehreren miteinander verbundenen einzelnen Zellen. So können für Kraftfahrzeug- oder Industriebatterien 20 bis mehrere 100 Zellen zu einer Batterie zusammengesetzt sein. Dabei sind die einzelnen Zellen wiederum modulweise aufgebaut. Eine Batterie für ein elektrisch angetriebenes Kraftfahrzeug kann bis zu 50 derartiger Module enthalten. In jedem Modul befinden sich je nach Ausführung weniger als zehn bis zu 50 Zellen. Der modulare Aufbau weist eine Anzahl von Vorteilen auf; einzelne Module können separat ausgetauscht werden, die Batterie kann an komplexe Einbausituationen angepasst werden, die Batterie kann einen segmentierten Aufbau aufweisen und die Kapazität der Batterie kann einfach angepasst werden. Die für die oben genannten Anwendungen derzeit favorisierten Batterien basieren auf einer Lithium-Technologie. Diese Batterien erwärmen sich während des Betriebs, so dass eine Kühleinrichtung erforderlich ist. Darüber hinaus ist es wichtig, die Einzelzellen innerhalb der Batterie auf einem gleichen Temperaturniveau zu halten. Besteht zwischen den Zellen dauerhaft eine unterschiedliche Temperatur, kann eine unterschiedlich schnelle Alterung der Zellen eintreten, was problematisch ist für die Langzeitbeständigkeit der Batterie. Bei sehr niedrigen Temperaturen, insbesondere unter 0°C kann es zudem notwendig sein, die Zellen zu erwärmen. Dies kann ebenfalls durch die Kühleinrichtung erfolgen, wobei das Medium dann meist von außen erwärmt wird. Derartige Kühleinrichtungen umfassen meist Kühlkreisläufe mit Wasser Bestandteil des Kühlmediums. Dabei erfolgt der Wärmeaustausch zwischen Kühlkreislauf und Batteriemodulen durch Kontaktkühlung. Leistungsfähige Kühlsysteme weisen einen hohen Durchfluss des Kohlmediums auf, wobei diese auch unter einem Überdruck von bis zu 3 bar stehen können. Ein direkter Kontakt des wasserbasierten Kühlmediums mit dem Inneren der Batteriezellen ist dabei unbedingt zu vermeiden, da ein solcher Kontakt zu heftigen chemischen Reaktionen mit Freisetzung von Wasserstoff führt. Darüber hinaus ist zu vermeiden, dass das Kühlmedium in Kontakt mit der Leistungselektronik der Batterie oder der Zellen kommt. Aufgrund der hohen Kosten einer Batterie soll diese eine lange Gebrauchsdauer bis zu 10 Jahren aufweisen. Bei dieser langen Gebrauchsdauer sind nicht nur große Mengen an freigesetztem Kühlwasser, beispielsweise nach einer Leckage, relevant, sondern auch geringe Mengen, die schleichend freigesetzt werden und sich im Inneren eines Batteriemoduls ansammeln können. Derartige schleichende Vorgänge finden beispielsweise durch den Austritt gasförmigen Wassers im Bereich der Anschlüsse der Kühlrohre zwischen zwei Batteriezellen statt. Dazu war es im Stand der Technik bekannt, die Kühlrohre angrenzender Batteriemodule miteinander zu verschweißen. Dabei ist dann allerdings nicht mehr möglich, einzelne Batteriemodule zerstörungsfrei auszutauschen. Herkömmliche Dichtungen, beispielsweise O-Ringe, weisen über eine lange Gebrauchsdauer keine ausreichende Dichtheit gegenüber Wasser, insbesondere Wasserdampf auf. Die Situation bei elektrostatischen Energiespeichern, beispielsweise Superkondensatoren, verhält sich analog.

Die EP1024322A2 offenbart ein Steckstück zur dichten Verbindung zu zwei mit axialem Abstand zueinander benachbart angeordneten, rohrförmigen Hohlkörpern, umfassend eine Verbindungshülse aus zähhartem Werkstoff, die zumindest stirnseitig beiderseits von Dichtringen aus elastomerem Wertstoff umschlossen ist.

Die US2006/0169507A1 offenbart eine Kühlstruktur mit mehreren Kühleinheiten, die über einen Verbindungsschlauch miteinander verbunden sind.

Die WO03/103083A2 betrifft eine Batterie mit wenigstens einer elektrochemischen Speicherzelle und einer Kühleinrichtung, wobei die wenigstens eine elektrochemische Speicherzelle zwischen Teilen der Kühleinrichtung angeordnet ist. Die Kühleinrichtung ist von einem flüssigen Kühlmedium durchströmt. Dabei kann im Bereich zwischen der Kühleinrichtung und dem Gehäuse Trocknungsmittel, insbesondere in Form wenigstens einer austauschbaren Patrone, angeordnet sein.

### Darstellung der Erfindung

Der Erfindung liegt die Aufgabe zugrunde, die Verbindung von Kühlrohren eines Kühlkreislaufs einer Batterie derart zu verbessern, dass die Dichtheit über eine lange Gebrauchsdauer verbessert ist

Diese Aufgabe wird mit den Merkmalen von Anspruch 1 gelöst. Auf vorteilhafte Ausgestaltungen nehmen die Unteransprüche Bezug.

Zur Lösung der Aufgabe ist das Steckstück mit einer wasserdampfpermeationsreduzierenden Ausrüstung versehen. Es hat sich herausgestellt, dass bei einer langen Gebrauchsdauer im Bereich von 10 Jahren ein wesentlicher Anteil des in das Innere der Batterie eingedrungene Wasser durch Gaspermeation durch die Dichtung hindurch eingetragen wurde. Diese Gaspermeation kann durch Wahl eines geeigneten Dichtungswerkstoffs maßgeblich und vorteilhaft beeinflusst werden. Bei Dichtungseinrichtungen gegen Wasser kommen vorzugsweise Materialien aus EPDM (Ethylen-Propylen-Dien-Kautschuk) oder Silikon in Betracht Dabei hat sich herausgestellt, dass insbesondere ein Dichtungsmaterial aus EPDM besonders geringe Wasserdampfdurchlässigkeiten aufweisen. Diese sind wesentlich geringer als bei einem Dichtungsmaterial aus Silikonkautschuk. Somit ist besteht eine erfindungsgemäße Dichtung aus einem EPDM. Neben EPDM weisen weitere Elastomere auf Basis von anderen Polyolefinen, SBR, IIR, XIIR, HNBR, FKM, FFKM eine vergleichsweise niedrige Wasserdampf-Permeation auf und können. daher für die Anwendung in Frage kommen. Die Wasserdampfdurchlässigkeit kann durch Zugabe eines Füllstoffes weiter reduziert werden. Besonders vorteilhafte Wirkungen lassen sich durch unpolare Füllstoffe, wie Rul3 erreichen. Das erfindungsgemäße Steckstück weist weitere Vorteile hinsichtlich der Montage auf. So können einzelne Batteriemodule montagebedingt einen Versatz aufweisen, so dass die Ktihlrohre der Batteßemodule nicht exakt zueinander fluchten. Das Steckstück weist ein Tragrohr auf, das mit Versatz zwischen den Kühlrohren angeordnet werden kann und dabei beide Kühlrohre dicht miteinander verbindet. Dadurch reduzieren sich die Anforderungen an die zulässigen Toleranzen. Je nachdem, ob das Steckstück auf ein Kühlrohr aufgeschoben oder in ein Kühlrohr eingesteckt wird, werden die Dichtbereich entweder in Inneren des Tragrohrs oder auf dem Außenumfang angeordnet.

Das Tragrohr kann an dem freien Ende einen Radialflansch aufweisen. Der Radialflansch weist dabei in die Richtung in der die Dichtbereiche angeordnet sind. Es hat sich herausgestellt, dass die Wasserdampfpermeation im Bereich der Dichtbereiche und dabei durch das Dichtungsmaterial selbst oder die Grenzflächen der Dichtbereiche erfolgt. Der Radialflansch verkleinert den Spalt zwischen dem Steckstück und dem Kühlrohr und verkleinert dadurch die Fläche die für eine Gaspermeation zur Verfügung steht. Als Material des Tragrohrs kann ein metallischer oder ein thermoplastischer Werkstoff gewählt werden. Beide Werkstoffgruppen weisen besonders geringe oder gar keine Wasserdampfdurchlässigkeiten auf. Die Dichtbereiche können auf das Tragrohr aufvulkanisiert oder aufgeklebt sein oder mechanisch in Nuten verankert sein,

An den freien Enden kann eine Dichtlippe angeordnet sein. Die Dichtlippe besteht aus einem Material mit besonders geringer Wasserdampfdurchlässigkeit und legt sich nach der Montage an die Wand der Kühlrohre an und verschließt so den Spalt zwischen dem Tragrohr und den Kühlrohren. Die Dichtlippe kann aus einem Metall oder einem Thermoplast mit sehr geringer Wasserdampfdurchlässigkeit bestehen. Es ist auch denkbar, dass die Dichtlippe materialeinheitlich und einstückig mit dem Tragrohr ausgebildet ist. In einer weiteren Ausgestaltung sind die freien Enden des Steckstücks mit einer Folie bedeckt, wobei die Folie wie eine Schürze ausgebildet ist. Diese legt sich ebenfalls nach der Montage an die Wand der Durchführungsöffnungen an. Die Folie kann aus einem Metall oder aus Thermoplast bestehen. Besonders Metalle besitzen eine geringe Gaspermeation. Denkbar ist auch, dass die Folie aus einem Thermoplast besteht, welches mit Metall beschichtet ist. Die Verwendung einer Folie hat den Vorteil, dass diese bei der Dichtung kaum mechanisch gestreckt wird und so ihre Barrierewirkung beibehält. Dichtlippe oder Folie können mit einer hydrophoben Beschichtung versehen sein. Dazu können Dichtlippe oder Folie beispielsweise mit PTFE beschichtet werden.

Das Tragrohr kann innenumfangsseitig oder außenumfangsseitig umlaufende Wülste aufweisen. Die Wülste stehen In Richtung der Kühlrohre vor und verringern die Spaltweite zwischen dem Tragrohr und den Kühlrohren, somit wird der freie Querschnitt reduziert. Die Wülste können materialeinheitlich und einstückig mit dem Tragrohr ausgebildet sein oder als separate Bauelemente aus thermoplastischem oder metallischem Werkstoff auf dem Tragrohr ausgebildet sein.

Aus den Dichtbereichen sind Dichtwülste ausgebildet. Vorzugsweise sind je freiem Ende mehrere Dichtwülste vorgesehen, so dass sich in dem Spalt zwischen Tragrohr und Kühlrohren eine Art Labyrinth ergibt und der Weg für die Wasserdampfpermeation verlängert ist.

Die Dichtwülste sind so ausgebildet, dass sich wenigstens zwei Täler ergeben, wobei jedem freien Ende wenigstens ein Tal zugeordnet ist. Das in den Tälern vorhandene Luftpolster wird bei der Montage komprimiert, wodurch hier ein Überdruck entsteht der der Wasserdampfpermeation entgegen wirkt Das Steckstück ist mit wasserbindenden Substanzen ausgerüstet. Wasserbindende Substanzen verringern den Wasserdampfpartialdruck, wodurch die Wasserdampfpermeation reduziert wird. Dadurch reduziert sich die Transfergeschwindigkeit des Wasserdampfes.

Die wasserbindenden Substanzen können Trockenmittel, Superabsorber oder Zeolithe oder Vliesstoffe oder Gewebe, die mit Trockenmitteln oder Superabsorbern ausgerüstet sind, umfassen. Dadurch können die wasserbindenden Substanzen einfach und sicher an dem Steckstück angeordnet werden.

Die wasserbindenden Substanzen sind in den Tälern angeordnet. Dort können die wasserbindenden Substanzen montagefreundlich befestig werden. Des Weiteren ist eine wasserbindende Wirkung in diesen Bereichen besonders wirkungsvoll.

Die Dichtbereiche können mit einer Beschichtung versehen sein. Die Beschichtung kann metallbasierend sein und dadurch wasserdampfundurchlässig sein oder hydrophob und dadurch wasserabweisend sein. Wasserabweisende Beschichtungen sind beispielsweise Beschichtungen aus PTFE.

Das Steckstück kann mit einem Leckagesensor ausgerüstet sein. Der Leckagesensor erfasst das durchtretende flüssige oder gasförmige Wasser und gibt einen Alarm frei, sobald ein vorgegeberier Grenzwert an durchgetretenem Wasser überschritten wurde.

### Kurzbeschreibung der Zeichnung

Einige Ausführungsbeispiele des erfindungsgemäßen Steckstücks werden nachfolgend anhand der Figuren näher erläutert. Diese zeigen, jeweils schematisch:
- Fig. 1: eine Batterie bestehend aus mehreren miteinander verbundenen Batteriesegmenten;
- Fig, 2: ein Steckstück mit außenumfangsseitig angeordneten Dichtbereichen;
- Fig. 3: ein Steckstück mit einer Folie an den freien Enden;
- Fig. 4: ein Steckstück mit innenumfangsseitig angeordneten Dichtbereichen.

### Ausführung der Erfindung

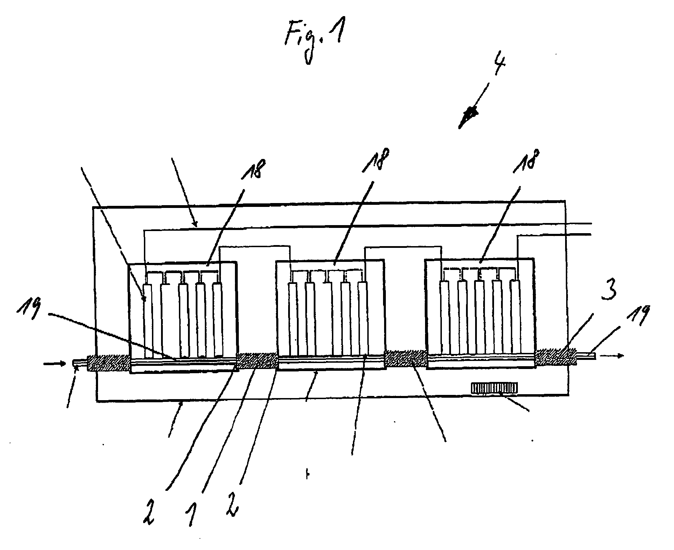

Figur 1 zeigt eine Batterie 4, hier eine wiederaufiiadbare Lithium-Ionen-Batterie als Bestandteil eines elektrischen Antriebs eines Kraftfahrzeugs. Die Batterie besteht aus mehreren Batteriesegmenten 18 in denen wiederum mehrere Zellen 20, hier sogenannte Coffee-Bag-Zellen zu einem Batteriesegment 18 zusammengefasst sind. Jedes Batteriesegment 18 ist zu dessen Kühlung mit einem Kühlkreislauf 3 ausgerüstet, wobei das Kühlmedium mittels Kühlrohren 19 innerhalb und zwischen den Batteriesegmenten 18 transportiert wird. Zum Verbinden der Kühlrohre 19 der einzelnen Batteriesegmente 18 untereinander ragen aus den Batteriesegmenten 18 Durchführungsöffnungen 2 der Kühlrohre 19 heraus und werden durch ein Steckstück 1 dicht miteinander verbunden. Dabei ist das Steckstück 1 so ausgebildet, dass ein Versatz von Batteriesegmenten 18 durch das Steckstück 1 ohne Verlust an Dichtwirkung kompensiert werden kann. Zur Montage wird das Steckstück 1 auf die Durchführungsöffnungen 2 aufgeschoben, wobei die vollständige Dichtwirkung ohne weitere Montageschritte oder Hilfsmittel erzielt wird.

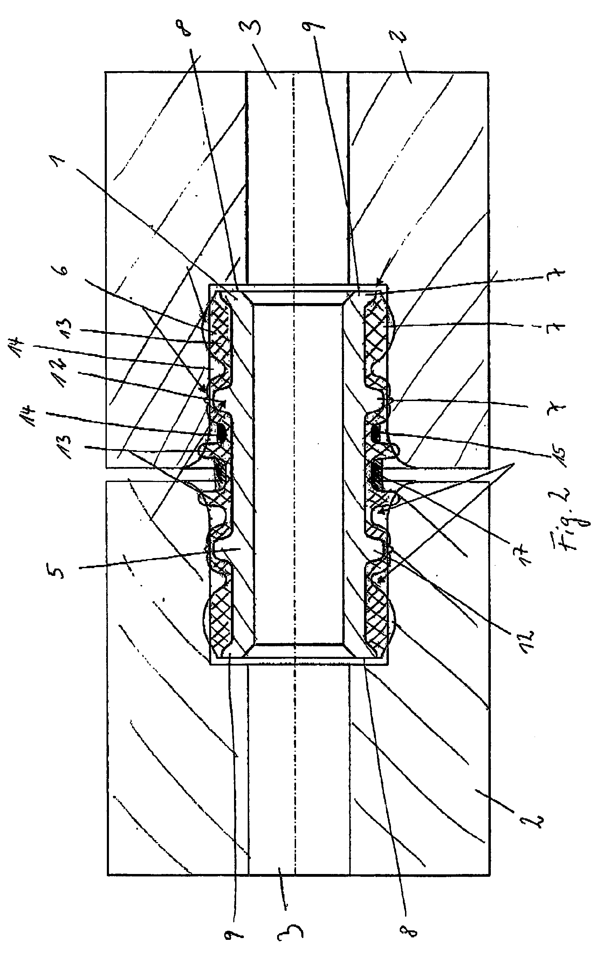

Figur 2 zeigt ein Steckstück 1, das zwischen zwei Durchführungsöfmungen 2 von Kühlrohren 19 eines Kühlkreislaufes 3 einer Batterie 4 angeordnet ist und die Durchführungsöffnungen 2 miteinander verbindet. Das Steckstück 1 besteht aus einem ein Tragrohr 5 aus metallischem Werkstoff auf das außenumfangsseitig Dichtbereiche 6 aus elastomerem Material angeordnet sind. Das elastomere Material ist in dieser Ausgestaltung aus der Gruppe der EPDM-Elastomere ausgewählt und beinhaltet Füllstoffe aus nichtpolaren Materialien unter anderem Ruß. Das gewählte elastomere Material bildet einen Bestandteil der wasserdampfpermeationsreduzierenden Ausrüstung 7. Ferner weist das Tragrohr 5 an seinen beiden freien Enden 8 ein Radialflansch 9 auf, welcher einen weiteren Bestandteil der wasserdampfpermeationsreduzierenden Ausrüstung 7 bildet. Aus dem Tragrohr 5 sind außenumfangsseitig umlaufende Wülste 12 ausgebildet und benachbart zu den Wülsten 12 sind aus den Dichtbereichen 6 Dichtwülste 13 ausgebildet. Dabei sind die Dichtwülste 13 so ausgebildet, dass sich wenigstens zwei Täler 14 ergeben, wobei jedem freien Ende 8 wenigstens ein Tal 14 zugeordnet ist. In den Tälern 14 ist eine wasserbindende Substanz 15, hier ein Superabsorber gebunden auf einem Vliesstoff angeordnet. In dem Spalt zwischen den Durchführungsöffnungen 2 der Kühlrohre 19 ist ein Leckagesensor 17 angeordnet. Die Wülste 12, die Dichtwülste 13 und die wasserbindenden Substanzen 15 sind Teil der wasserdampfpermeationsreduzierenden Ausrüstung 7.

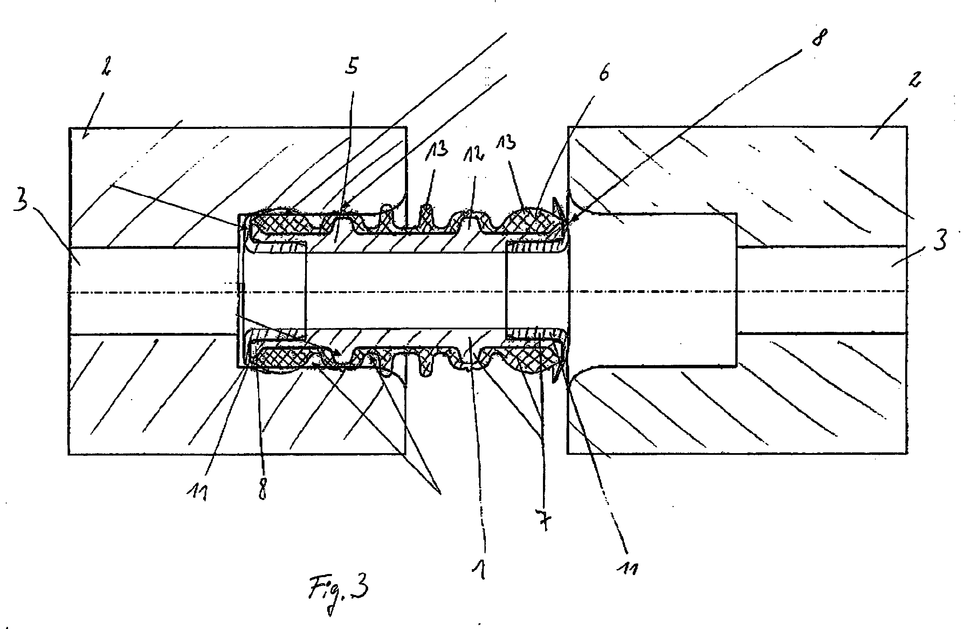

Figur 3 zeigt ein Steckstück 1 gemäß Figur 2, wobei das Steckstück 1 hier zusätzlich mit einer wasserdampfdichten Folie 11 ausgerüstet ist, die die freien Enden 8 des Steckstücks 1 bedeckt. Ferner sind die Dichtbereiche 6 mit einer Beschichtung 16 aus PTFE versehen.

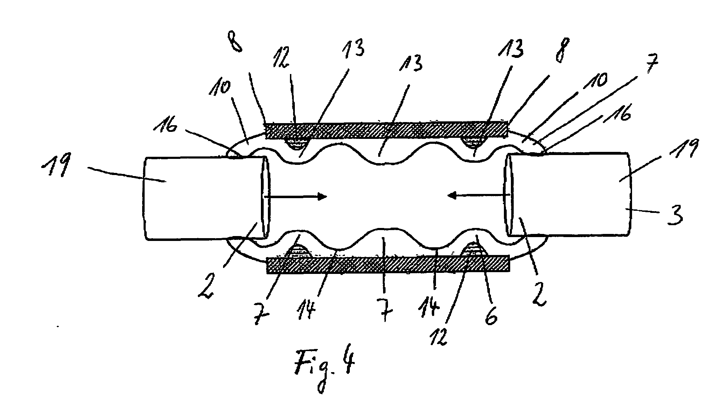

Figur 4 zeigt ein Steckstück 1, das zwischen zwei Durchführungsöffnungen 2 von Kühlrohren 19 eines Kühlkreislaufes 3 einer Batterie 4 angeordnet Ist und die Durchführungsöffnungen 2 miteinander verbindet Das Steckstück 1 besteht aus einem ein Tragrohr 5 aus metallischem Werkstoff auf das innenumfangsseitig Dichtbereiche 6 aus elastomerem Material angeordnet sind. Das elastomere Material ist in dieser Ausgestaltung aus der Gruppe der EPDM-Kautschuke ausgewählt. Aus den Dichtbereichen 6 sind innenumfangsseitig umlaufende Dichtwülste 13 ausgebildet. Dabei sind die Dichtwülste 13 so ausgebildet, dass sich wenigstens zwei Täler 14 ergeben, wobei jedem freien Ende 8 wenigstens ein Tal 14 zugeordnet ist An beiden freien Enden 8 ist eine Dichtlippe 10 angeordnet, die mit einer wasserdampfpermeationsreduzierenden Beschichtung 16 versehen ist.

## Patentansprüche

1. Steckstück (1) zum Verbinden von Durchführungsöffnungen (2) eines Kühlkreislaufes (3) eines Energiespeichers (4), umfassend ein Tragrohr (5), welches mit Dichtbereichen (6) aus elastomerem Material versehen ist, **dadurch gekennzeichnet, dass** das Steckstück (1) mit einer wasserdampfpermeationsreduzierenden Ausrüstung (7) versehen ist,
wobei die wasserdampfpermeationsreduzierende Ausrüstung (7) aus den Dichtbereichen (6) ausgebildete Dichtwülste (13) aufweist, die so ausgebildet sind, dass sich wenigstens zwei Täler (14) ergeben, wobei jedem freien Ende (8) wenigstens ein Tal (14) zugeordnet ist,
wobei eine wasserbindende Substanz (16) in den Tälern (14) angeordnet ist.

2. Steckstück nach Anspruch 1, **dadurch gekennzeichnet, dass** das Tragrohr (5) an dem freien Ende (8) ein Radialflansch (9) aufweist.

3. Steckstück nach Anspruch 1 oder 2, **dadurch gekennzeichnet, dass** an den freien Enden (8) eine Dichtlippe (10) angeordnet ist.

4. Steckstück nach einem der Ansprüche 1 bis 3, **dadurch gekennzeichnet, dass** die freien Enden (8) des Steckstücks (1) mit einer Folie (11) bedeckt sind.

5. Steckstück nach einem der Ansprüche 1 bis 4, **dadurch gekennzeichnet, dass** das Tragrohr (5) innenumfangsseitig oder außenumfangsseitig umlaufende Wülste (12) aufweist.

6. Steckstück nach einem der Ansprüche 1 bis 5, **dadurch gekennzeichnet, dass** die wasserbindenden Substanzen (15) Trockenmittel oder Superabsorber oder Vliesstoffe oder Gewebe, die mit Trockenmitteln oder Superabsorbern ausgerüstet sind, umfassen.

7. Steckstück nach einem der Ansprüche 1 bis 6, **dadurch gekennzeichnet, dass** die Dichtbereiche (6) mit einer Beschichtung (16) versehen sind.

8. Steckstück nach einem der Ansprüche 1 bis 7, **dadurch gekennzeichnet, dass** das Steckstück (1) mit einem Leckagesensor (17) ausgerüstet ist.

9. Energiespeicher (4), umfassend Segmente (18) mit Kühlrohre (19), deren Durchführungsaffnungen (2) durch ein Steckstück (1) nach einem der Ansprüche 1 bis 8 miteinander verbunden sind.

10. Energiespeicher (4) ausgebildet als Batterie, umfassend Batteriesegmente (18) mit Kühlrohren (19), deren Durchführungsöffnungen (2) durch ein Steckstück (1) nach einem der Ansprüche 1 bis 8 miteinander verbunden sind.

## Claims

1. Plug-in piece (1) for connecting passage openings (2) of a cooling circuit (3) of an energy store (4), comprising a supporting tube (5) which is provided with sealing regions (6) made of elastomeric material, **characterized in that** the plug-in piece (1) is provided with a finish (7) that reduces water vapour permeation, wherein the finish (7) that reduces water vapour permeation has sealing beads (13) formed from the sealing regions (6), said sealing beads (13) being formed such that at least two depressions (14) are produced, wherein at least one depression (14) is assigned to each free end (8), wherein a hydrophilic substance (15) is arranged in the depressions (14).

2. Plug-in piece according to Claim 1, **characterized in that** the supporting tube (5) has a radial flange (9) at the free end (8).

3. Plug-in piece according to Claim 1 or 2, **characterized in that** a sealing lip (10) is arranged at the free ends (8).

4. Plug-in piece according to one of Claims 1 to 3, **characterized in that** the free ends (8) of the plug-in piece (1) are covered with a film (11).

5. Plug-in piece according to one of Claims 1 to 4, **characterized in that** the supporting tube (5) has circumferential beads (12) on the inner circumferential side or the outer circumferential side.

6. Plug-in piece according to one of Claims 1 to 5, **characterized in that** the hydrophilic substances (15) comprise desiccants or superabsorbents or nonwovens or fabric materials which are finished with desiccants or superabsorbents.

7. Plug-in piece according to one of Claims 1 to 6, **characterized in that** the sealing regions (6) are provided with a coating (16).

8. Plug-in piece according to one of Claims 1 to 7, **characterized in that** the plug-in piece (1) is equipped with a leakage sensor (17).

9. Energy store (4) comprising segments (18) having cooling tubes (19), the passage openings (2) of which are connected together by a plug-in piece (1) according to one of Claims 1 to 8.

10. Energy store (4) in the form of a battery, comprising battery segments (18) having cooling tubes (19), the passage openings (2) of which are connected together by a plug-in piece (1) according to one of Claims 1 to 8.

## Revendications

1. Pièce enfichable (1) pour la connexion d'ouvertures de passage (2) d'un circuit de refroidissement (3) d'un accumulateur d'énergie (4), comprenant un tube porteur (5) qui est muni de zones d'étanchéité (6) en matériau élastomère, **caractérisée en ce que** la pièce enfichable (1) est munie d'un équipement réduisant la perméation de la vapeur d'eau (7), l'équipement réduisant la perméation de la vapeur d'eau (7) présentant des bourrelets d'étanchéité (13) réalisés à partir des zones d'étanchéité (6), lesquels sont réalisés de telle sorte qu'au moins deux vallées (14) soient produites, au moins une vallée (14) étant associée à chaque extrémité libre (8),
une substance fixant l'eau (15) étant disposée dans les vallées (14).

2. Pièce enfichable selon la revendication 1, **caractérisée en ce que** le tube porteur (5) présente à l'extrémité libre (8) une bride radiale (9).

3. Pièce enfichable selon la revendication 1 ou 2, **caractérisée en ce qu'**une lèvre d'étanchéité (10) est disposée au niveau des extrémités libres (8).

4. Pièce enfichable selon l'une quelconque des revendications 1 à 3, **caractérisée en ce que** les extrémités libres (8) de la pièce enfichable (1) sont recouvertes d'un film (11).

5. Pièce enfichable selon l'une quelconque des revendications 1 à 4, **caractérisée en ce que** le tube porteur (5) présente, du côté de la périphérie intérieure ou de la périphérie extérieure, des bourrelets périphériques (12).

6. Pièce enfichable selon l'une quelconque des revendications 1 à 5, **caractérisée en ce que** les substances fixant l'eau (15) comprennent des agents dessiccatifs ou des superabsorbants ou des non tissés ou des tissus qui sont munis d'agents dessiccatifs ou de superabsorbants.

7. Pièce enfichable selon l'une quelconque des revendications 1 à 6, caractérisée ce que les zones d'étanchéité (6) sont pourvues d'un revêtement (16).

8. Pièce enfichable selon l'une quelconque des revendications 1 à 7, **caractérisée en ce que** la pièce enfichable (1) est munie d'un capteur de fuite (17).

9. Accumulateur d'énergie (4), comprenant des segments (18) avec des tubes de refroidissement (19), dont les ouvertures de passage (2) sont connectées les unes aux autres par une pièce enfichable (1) selon l'une quelconque des revendications 1 à 8.

10. Accumulateur d'énergie (4) réalisé sous forme de batterie, comprenant des segments de batterie (18) avec des tubes de refroidissement (19), dont les ouvertures de passage (2) sont connectées les unes aux autres par une pièce enfichable (1) selon l'une quelconque des revendications 1 à 8.
